# EUROPEAN PATENT SPECIFICATION

(11) **EP 1 651 655 B1**
(45) Date of publication and mention of the grant of the patent: **02.04.2008**
(21) Application number: 04763601.4
(22) Date of filing: 29.07.2004
(51) Int. Cl.: C07F 9/50

(54) **A PROCESS FOR THE PREPARATION OF ACYLPHOSPHINES**
VERFAHREN ZUR HERSTELLUNG VON ACYLPHOSPHINEN
PROCEDE DE PREPARATION D'ACYLPHOSPHINES

(30) Priority: 31.07.2003 EP 03016649
(43) Date of publication of application: 03.05.2006
(73) Proprietor: BASF SE, 67056 Ludwigshafen (DE)
(72) Inventor: HUTTENLOCH, Oliver, 68809 Neulussheim (DE); MAASE, Matthias, 67346 Speyer (DE); FLAJS, Toni, 67112 Mutterstadt (DE); WERNER, Jürgen, 67098 Bad Dürkheim (DE)
(74) Representative: Isenbruck, Günter
(86) International application number: PCT/EP2004/008497
(87) International publication number: WO 2005/014606

(56) References cited:
- WO-A-00/32612
- GB-A- 2 280 671
- US-A- 5 276 219
- US-A- 5 321 148
- US-A- 5 912 378

## Description

The present invention relates to a process for the preparation of acylphosphines.

Mono- and bisacylphosphines are known in the state of the art as intermediates which are obtained when preparing mono- and bisacylphosphine oxide or mono- and bisacylphosphine sulfide compounds. These oxides and sulfides find diverse applications as reactive initiators in the light-induced polymerisation of ethylenically unsaturated compounds.

US 4,298,738 discloses the preparation of monoacylphosphine oxides via reaction of diorganylphosphine chloride with an alcohol and subsequent reaction of the reaction product with an acid halide. In EP-A 00 40721, monoacylphosphines are obtained from the reaction of acid halides with lithium diorganylphosphine, diorganylphos-phine or diorganyltrialkylsilylphosphine.

In Angew. Makromol. Chem. 199 (1992), 1-6, S. Banerjee et al. describe the preparation of poly(terephthaloylphosphine) via reaction of dilithium phenylphosphine with terephthaloyl chloride.

In Chem. Ber. 92 (1959), 3183-3189, Issleib et al., describe the preparation of acetyl diphenylphosphine via reaction of sodium diphenylphosphine with acetyl chloride.

US 5,472,992, inter alia, carries out the preparation of bisacylphosphine oxide photoinitiators via reaction of the phosphine with the corresponding acid chloride in the presence of a base with subsequent oxidation of the bisacylphosphine formed.

As the technology of the mono- and bisacylphosphine oxides is becoming increasingly important owing to the excellent photoinitiator properties of these compounds, there is also a need for highly practicable processes involving as little elaboration as possible for the preparation of the required intermediates, especially of the corresponding mono and bisacylphosphines, but also of the oxide and sulfide end products.

WO 00/32612 describes a process by which it is possible to circumvent the use of the phosphine educts (R₂-PH, R-PH₂) which are undesirable because of their volatility, bad smell, toxicity and susceptibility to air and fire. The process is a one-pot process for the preparation of mono- and bisacylphosphines, where the starting material is a monohalogenophosphines or a P,P-dihalogenophosphine, which are less volatile, less toxic and less susceptible to air. The organic phosphorous halides are reacted with an alkali metal in the presence of a catalyst to give a metallised phosphine, which is subsequently reacted with an acid halide to give the acyl phosphine.

It is an object of the present invention to improve the process described in WO 00/32612.

A process has been found for the preparation of acylphosphines of formula (I) 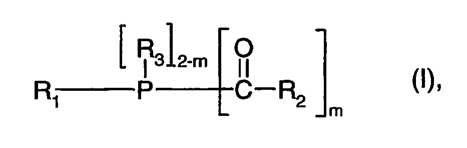 wherein
- m: is 1 or 2;
- R₁: is C₁-C₁₈ alkyl, C₂-C₁₈ alkyl which is interrupted by one or several non-successive O atoms; phenyl-substituted C₁-C₄ alkyl, C₂-C₈ alkenyl, phenyl, naphthyl, biphenyl, C₅-C₁₂ cycloalkyl or a 5- or 6-membered O-, S- or N-containing heterocyclic ring, the radicals phenyl, naphthyl, biphenyl, C₅-C₁₂ cycloalkyl or the 5- or 6-membered O-, S- or N-containing heterocyclic ring being unsubstituted or substituted by one to five halogen, C₁-C₈ alkyl, C₁-C₈ alkylthio and/or C₁-C₈ alkoxy;
- R₂: is C₁-C₁₈ alkyl, C₃-C₁₂ cycloalkyl, C₂-C₁₈ alkenyl, phenyl, naphthyl, biphenyl or a 5- or 6-membered O-, S- or N-containing heterocyclic ring, the radicals phenyl, naphthyl, biphenyl or 5- or 6-membered O-, S- or N-containing heterocyclic ring being unsubstituted or substituted by one to four C₁-C₈ alkyl, C₁-C₈ alkoxy, C₁-C₈ alkylthio and/or halogen;
- R₃: is C₁-C₁₈ alkyl, C₂-C₁₈ alkyl which is interrupted by one or several non-successive O atoms, phenylsubstituted C₁-C₄ alkyl, C₂-C₈ alkenyl, phenyl, naphthyl, biphenyl, C₅-C₁₂ cycloalkyl or a 5- or 6-membered O-, S- or N-containing heterocyclic ring, the radicals phenyl, naphthyl, biphenyl, C₅-C₁₂ cycloalkyl or the 5- or 6-membered O-, S- or N-containing heterocyclic ring being unsubstituted or substituted by one to five halogen, C₁-C₁₈ alkyl, C₁-C₈ alkylthio and/or C₁-C₈ alkoxy;
by
(1) reacting organic phosphorus halides of formula (II) 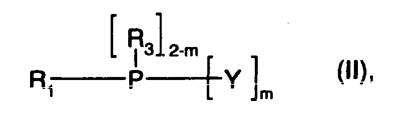 wherein R₁, R₃ and m have the meaning cited above;
   and Y is Br or Cl,
   with sodium in a solvent in the presence of an activator, wherein sodium is present in the form of a dispersion of sodium particles having a mean particle size of ≤ 200 µm in the solvent,
(2) subsequent reaction with acid halides of formula (III) 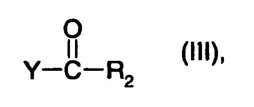 wherein R₂ and Y have the meaning cited above;
   which process is carried out without isolation of the intermediates.

C₁-C₁₈ Alkyl is linear or branched and is, for example, C₁-C₁₂-, C₁C₈-, C₁-C₆-, or C₁-C₄-alkyl. Examples are methyl, ethyl, propyl, isopropyl, n-butyl, sec-butyl, isobutyl, tert-butyl, pentyl, hexyl, heptyl, 2,4,4-trimethylpentyl, 2-ethylhexyl, octyl, nonyl, decyl, undecyl, dodecyl, tetradecyl, pentadecyl, hexadecyl, heptadecyl or octadecyl; C₁-C₁₂, C₁-C₈ and C₁-C₄ alkyl are also linear or branched and have, for example, the meanings cited above up to the corresponding number of carbon atoms.

C₂-C₁₈ Alkyl, which is interrupted once or several times by non-successive -O-, is interrupted, for example, 1-9, e.g. 1-7, 1-5, 1-3 or 1 or 2 times by -O-, the O atoms always being interrupted by at least one methylene group. The alkyl groups may be linear or branched. The structural units obtained are thus, for example,
-CH₂-O-CH₃, -CH₂CH₂-O-CH₂CH₃, -[CH₂CH₂O]_{y}-CH₃, where y = 1-8,
-(CH₂CH₂O)₇CH₂CH₃, -CH₂-CH(CH₃)-O-CH₂-CH₂CH₃ or -CH₂-CH (CH₃)-O-CH₂-CH₃.

Phenyl-substituted C₁-C₄-alkyl is typically benzyl, phenylethyl, α-methylbenzyl, phenylbutyl or α,α-dimethylbenzyl, preferably benzyl.

C₂-C₁₈ Alkenyl radicals may be mono- or polyunsaturated, linear or branched and are, for example, allyl, methallyl, 1,1-dimethylallyl, propenyl, butenyl, pentadienyl, hexenyl or octenyl, preferably allyl. R₂ defined as C₂-C₁₈ alkenyl is typically C₂-C₈, C₂-C₆, preferably C₂-C₄ alkenyl.

C₅-C₁₂ Cycloalkyl is, for example, cyclopentyl, cyclohexyl, cyclooctyl, cyclododecyl, preferably cyclopentyl and cyclohexyl, more preferably cyclohexyl; C₃-C₁₂ cycloalkyl is additionally e.g. cyclopropyl.

C₁-C₁₈ Alkoxy is linear or branched radicals and is typically methoxy, ethoxy, propoxy, isopropoxy, n-butyloxy, sec-butyloxy, isobutyloxy, tert-butyloxy, pentyloxy, hexyloxy, heptyloxy, 2,4,4-trimethylpentyloxy, 2-ethylhexyloxy or octyloxy, preferably methoxy, ethoxy, propoxy, isopropoxy, n-butyloxy, sec-butyloxy, isobutyloxy, tert-butyoxy, most preferably methoxy.

Halogen is fluoro, chloro, bromo and iodo, preferably chloro and bromo, most preferably chloro.

Examples of O-, S- or N-containing 5- or 6-membered heterocyclic rings are furyl, thienyl, pyrrolyl, oxinyl, dioxinyl or pyridyl. The cited heterocyclic radicals may be substituted by one to five, e.g. by one or two, linear or branched C₁-C₈ alkyl, halogen and/or C₁-C₈ alkoxy. Examples of such compounds are dimethylpyridyl, dimethylpyrro-lyl or methylfuryl.

Substituted phenyl, naphthyl or biphenyl is substituted by one to five, e.g. by one, two, three or four, preferably by one, two or three, for example linear or branched C₁-C₈ alkyl, linear or branched C₁-C₈alkoxy or by halogen.

Preferred substituents for phenyl, naphthyl and biphenyl are C₁-C₄ alkyl, preferably methyl, C₁-C₄ alkoxy, more preferably methoxy, and chloro. Particularly preferred substituents are, for example, 2,4,6-trimethylphenyl, 2,6-dichlorophenyl, 2,6-dimethylphenyl or 2,6-dimethoxyphenyl.

R₂ is, for example, phenyl, preferably 2,4,6-trimethylphenyl, 2,6-dimethylphenyl or 2,6-dimethoxyphenyl, most preferably 2,4,6-trimethylphenyl.

R₁ and R₃ are preferably unsubstituted phenyl or C₁-C₄ alkyl substituted phenyl, most preferably phenyl.

C₁-C₄ Alkoxyphenyl is phenyl which is substituted by one to four alkoxy radicals, for example 2,6-dimethoxyphenyl, 2,4-dimethoxyphenyl, methoxyphenyl, ethoxyphenyl, propoxyphenyl or butoxyphenyl.

Within the scope of the present description and claims, "and/or" shall mean that not only one of the defined alternatives (substituents) may be present, but that also several different ones of the defined alternatives (substituents) may be present together, i.e. mixtures of different alternatives (substituents).

Within the scope of the present description and claims, "at least" shall be defined as "one" or "more than one", for example one or two or three, preferably one or two.

In the process of the invention for the preparation of mono- and bisacylphosphines, an organic phosphorus halide (II) is first reacted with sodium metal, the metallised phosphine (IIa) being formed via different intermediary steps: 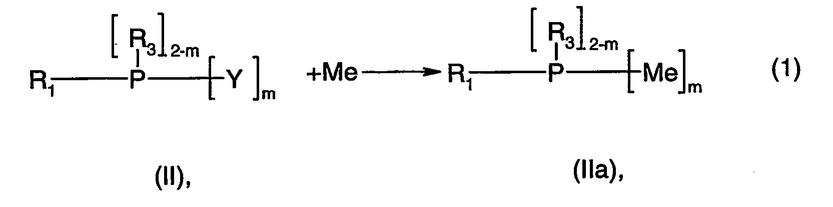 R₁ R₃ and m have the meaning cited above, Me is Na metal.

It is useful to employ from 4 to 8 atom equivalents of the sodium metal for the preparation of bisacylphosphines, and 2 to 4 atom equivalents of the sodium metal for the preparation of monoacylphosphines.

The reaction (1) of the organic phosphorous halide with the alkali metal is carried out in a solvent. Suitable solvents are known aliphatic or aromatic solvents. Suitable solvents are, for example, alcanes such as pentane, hexane, petroleum ether and ligroine, cycloalcanes such as cyclohexane and decalin, aromatic hydrocarbons such as toluene, ethyl benzene and tetralin, aliphatic, aromatic and mixed aliphatic-aromatic ethers, such as dimethyl ether, diethyl ether, methylpropyl ether, 1,2-dimethoxyethane, bis(2-methoxyethyl) ether, dibutylether, methylphenylether and cyclic ethers, such as tetrahydrofuran and dioxane. Toluol and ethyl benzene are preferably used. The reaction temperatures are preferably in the range from -20°C to +160°C, e.g. from 80°C to 120°C.

It is an essential feature of the process of the invention that the sodium metal Na is present in the reaction medium in the form of particles having a mean particle size of ≤ 200 µm, preferably ≤ 50 µm when reaction (1) is carried out. The lower limit for the mean particle size of the Na metal particles is generally about 1 µm, preferably 5 µm, more preferably 10 µm. Na metal particles having the specified mean particle size can be readily produced by dispersing molten Na metal in the reaction medium by means of a dispersing apparatus, preferably a turbine stirrer or a reaction mixing pump. A dispersion of Na metal in the solvent is prepared in a suitable manner by adding Na metal to a solvent, which is one or more of the solvents listed above, heating the mixture to a temperature above the melting point of the Na metal, and vigorously stirring the mixture with a high speed turbine stirrer. The temperature employed while dispersing the Na metal in the solvent is in general ≥ 95 °C, for example from 95 °C to 200 °C. A stable dispersion is obtained, which can be cooled and kept below the melting point of the alkali metal. In one embodiment of the inventive process, the Na metal dispersion is prepared separately, cooled and subsequently transferred to a reaction vessel where it is reacted with the organic phosphorous halide to give the metallised phosphine (IIa).

The reaction (1) of the organic phosphorous halide with the Na metal is carried out in the presence of an activator. Suitable activators are aliphatic alcolols having 1 to 10 carbon atoms, preferably ethanol, 1-propanol, 2-propanol, n-butanol, iso-butanol, sec.-butanol and tert.-butanol, more preferably n-butanol, aromatic chlorohydrocarbons, preferably chlorobenzene, aliphatic chlorohydrocarbons, preferably 1-chloropentane, aromatic bromohydrocarbons, preferably bromobenzene, and aliphatic bromohydrocarbons. Two or more different activators may be employed, which may be added at different stages of the reaction. Most preferred activators are n-butanol and chlorobenzene.

Each activator is present in the reaction mixture in an amount of 0,01 to 20 mol.-% based on the amount of the Na metal.

If chlorobenzene or 1-chloropentane is employed as an activator, it is added in an amount of in general from 0,1 to 20 mol-%, preferably from 1 to 10 mol-%, more preferably from 3 to 7 mol-%, based on the amount of the Na metal. If an aliphatic alcohol is used as an activator, it is added in an amount of in general from 0,01 to 10 mol-%, preferably form 0,05 to 1 mol-%, based of the amount of the Na metal.

Usefully, the organic phosphorous halide, optionally dissolved in a solvent which can be one or more of the solvents listed above, is added continuously to the Na metal dispersion in the presence of the activator. Additional activator may be added at a later stage of the reaction. In a particularly preferred embodiment of the inventive process, sodium is employed as the Na metal, and chlorobenzene and n-butanol are used as activators, in the amounts specified above. Chlorobenzene is present as a first activator in the Na metal dispersion when the addition of the organic phosphorous halide starts. The organic phosphorous halide is added until the reaction stops to develop heat. At this point, n-butanol is added as a second activator, and the addition of organic phosphorous halide is continued. The reaction again starts to develop heat after the addition of the second activator, and the reaction continues to proceed. The n-butanol can be added all at once or in a continuous manner along with the organic phosphorous halide.

The metallised phosphine (IIa) obtained as described above is reacted in the next reaction step (2) with an acid halide (III) to the mono- or bisacylphosphine (I): 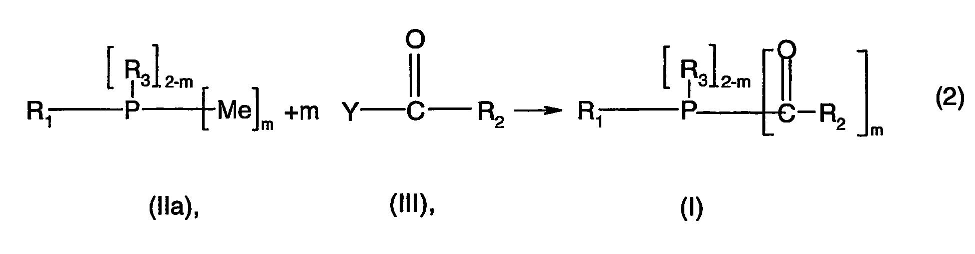
R₁, R₂, R₃, Me and m have the meaning cited above. Y is bromo or chloro, preferably chloro.

The solvents used may be, for example, the same as those used above for the first step. However, it is also possible to remove the solvent used in the first step by distillation and to take up the residue in another solvent and then to further process it.

It is preferred to work in the same solvent as in the preceding step, most preferably in toluene or ethylbenzene

The reaction temperatures for the reaction with the acid halide are usefully in the range from -20 to +120°C.

The mono- or bisacylphosphine of formula (I) can be isolated by the customary technological methods which are known to the skilled person, for example by evaporation or distillation of the solvents and/or crystallisation. Likewise, the customary methods of purification may be used, for example crystallisation, distillation or chromatography. Usefully, water is added to the reaction mixture in order to remove sodium chloride, the water phase is separated off and the product is isolated from the organic phase by distilling off the solvents and/or by crystallisation of the product. The product can be further purified in the usual manner, for example by recrystallisation from a suitable solvent.

However, the phosphines can also be reacted without isolation to the corresponding mono- or bisacylphosphine oxides or mono- or bisacylphosphine sulfides.

Depending an the substituents used, isomeric mixtures may be formed by the process of the invention.

Using the process of this invention it is also possible to prepare mono- and bisacylphosphines together in one reaction step.

By means of the process of the invention it is furthermore also possible to prepare mixtures of aliphatic and aromatic monoacylphosphines or mixtures of aliphatic and aromatic bis-acylphosphines. Mixtures of compounds of formula (II), wherein R₁ is an aliphatic radical, and of compounds of formula (II), wherein R₁ is an aromatic radical, are used in this case.

The acid halides (III) used as starting materials are known substances, some of which are commercially available, or may be prepared in analogy to known compounds.

From the acylphosphine of formula (I) obtained in reaction (2), acylphosphine oxides and acylphosphine sulfides of formula (IV) 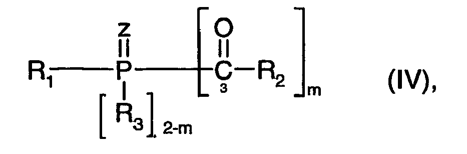 wherein
R₁, R₂, R₃ and m have the meaning cited in claim 1, and
Z is O or S,
can be prepared by oxidation or reaction with sulfur of the acylphosphine of formula (I).

The preparation of acylphospine oxides and acylphosphine sulfides from the acylphosphines of the formula (I) is described in detail in WO00/32612.

The following Examples illustrate the invention in more detail.

### Examples

### Example 1: Preparation of bis-(2,4,6-trimethylbenzoyl)-phenylphosphine

### (Activation by chlorobenzene and n-butanol, stirrer-type: turbine stirrer)

Under an inert atmosphere and with exclusion of moisture a dispersion of sodium (11.5 g; 0.50 mol) in toluene (100 ml) is produced by stirring with a high speed turbine stirrer with 11000 rpm at 105°C resulting in sodium with a main particle size of less than 50 µm. The mixture is cooled to 30-35°C without stirring. Then the turbine stirrer is started again and chlorobenzene (2.8 g; 0.025 mol) is added dropwise and the contents of the flask warms to 45-50°C. The resulting black suspension is heated to 100°C and P,P-dichlorophenylphosphine (19.7 g, 0.11 mol) is added dropwise at this temperature with exothermic behaviour. After the addition of ¼ of the whole amount of P,P-dichlorophenylphosphine the reaction stops to develop heat. At this point n-butanol (0.05 ml) is added and the exothermic reaction starts again. All the rest of the addition of P,P-dichlorophenylphosphine stays exothermic. The resulting green suspension is stirred at 100-110°C for 30 min. The mixture is cooled to 75°C and 2,4,6-trimethylbenzoylchloride (43.8g; 0.24 mol) is added dropwise over a period of 30 min at this temperature. An exothermic reaction was observable. To the brown suspension was added toluene (200 ml) and the mixture was stirred for 60 min at 70-85°C. The mixture was hydrolysed with water (150 ml) and the phases were separated. The product phase was analysed by ³¹P-NMR. This showed the desired bis-(2,4,6-trimethylbenzoyl)-phenylphosphine with 85-90% purity.

### Comparative example 1: Preparation of bis-(2,4,6-trimethylbenzoyl)-phenylphosphine

### (Activation by chlorobenzene and n-butanol, stirrer-type: standard blade stirrer)

Under an inert atmosphere and with exclusion of moisture a dispersion of sodium (11.2 g, 0.50 mol) in toluene (200 ml) is produced by stirring with a standard blade stirrer with 1500 rpm at 105°C resulting in sodium with a main particle size of 950 µm. The mixture is cooled to 30-35°C without stirring. Then the stirrer is started again with 300 rpm and chlorobenzene (2.93 g, 0.026 mol) is added dropwise without any visible effects. Then n-butanol (0.1 ml) is added and the mixture is heated to 40-50°C leading to a black coloured suspension. This suspension is heated to 100°C and P,P-dichlorophenylphosphine (20.4 g, 0.114 mol) is added dropwise at this temperature with exothermic behaviour. After the addition of ¼ of the whole amount of P,P-dichlorophenylphosphine the reaction stops to develop heat. At this point n-butanol (0.05 ml) is added and the exothermic reaction does not start again. The addition of n-butanol (0.05 ml) is repeated and the exothermic reaction starts again. All the rest of the addition of P,P-dichlorophenylphosphine stays exothermic. The resulting brown suspension is stirred at 95-105°C for 60 min. The mixture is cooled to 75°C and 2,4,6-trimethylbenzoylchloride (45.85 g, 0.251 mol) is added dropwise over a period of 30 min at this temperature. An exothermic reaction was observable only for the first 10% of the total amount of 2,4,6-trimethylbenzoylchloride. The suspension is stirred at 90°C for 90 min. The mixture was hydrolysed with water (200 ml) and the phases were separated. The product phase was analysed by ³¹P-NMR. This showed the desired bis-(2,4,6-trimethylbenzoyl)-phenyiphosphine only in traces (ca. 1%).

### Example 2: Preparation of bis-(2,4,6-trimethylbenzoyl)-phenylphosphine oxide

### (Activation only by n-butanol, stirrer-type: turbine stirrer)

Under an inert atmosphere and with exclusion of moisture a dispersion of sodium (11.5 g, 0.50 mol) in toluene (100 ml) is produced by stirring with a high speed turbine stirrer at 105 °C. With further stirring at 100°C, n-butanol (0.05 ml) is added. To the resulting grey suspension is added P,P-dichlorophenylphosphine (21.5 g, 0.12 mol) dropwise over a period of 20 min with constant development of exothermic heat. The mixture is then stirred for 30 min at 100-110°C and toluene (100 ml) was added. Then 2,4,6-trimethylbenzoylchloride (49.3 g, 0.,27 mol) was added dropwise over a period of 30 min at 70-80°C. Only during the first 20% of the addition of 2,4,6-trimethylbenzoylchloride an exothermic reaction is observable. The reaction temperature is increased to 85°C and later to 110°C so to allow the exothermic reaction. The mixture is stirred at 110°C for 30 min. The temperature is lowered to 40°C and H₂O₂ (30%, 17.0 g, 0.15 mol) and water (150 ml) are added dropwise. The reaction is stirred at a temperature between 40 and 60°C for 2 h. The phases were separated. The product phase was analysed by ³¹P-NMR. This showed the desired bis-(2,4,6-trimethylbenzoyl)-phenylphosphine oxide with 25% purity.

## Claims

1. A process for the preparation of acylphosphines of formula (I) 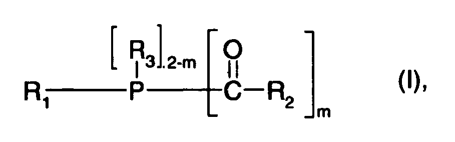 wherein
m is 1 or 2;
R₁ is C₁-C₁₈ alkyl, C₂-C₁₈ alkyl which is interrupted by one or several non-successive O atoms, phenyl substituted C₁-C₄ alkyl, C₂-C₈ alkenyl, phenyl, naphthyl, biphenyl, C₅-C₁₂ cycloalkyl or a 5- or 6-membered O-, S- or N-containing heterocyclic ring, the radicals phenyl, naphthyl, biphenyl, C₅-C₁₂ cycloalkyl or the 5- or 6-membered O-, S- or N-containing heterocyclic ring being unsubstituted or substituted by one to five halogen, C₁-C₈ alkyl, C₁-C₈ alkylthio and/or C₁-C₈ alkoxy;
R₂ is C₁-C₁₈ alkyl, C₃-C₁₂ cycloalkyl, C₂-C₁₈ alkenyl, phenyl, naphthyl, biphenyl or a 5- or 6-membered O-, S- or N-containing heterocyclic ring, the radicals phenyl, naphthyl, biphenyl or 5- or 6-membered O-, S- or N-containing heterocyclic ring being unsubstituted or substituted by one to four C₁-C₈ alkyl, C₁-C₈ alkoxy, C₁-C₈ alkylthio and/or halogen;
R₃ is C₁-C₁₈ alkyl, C₂-C₁₈ alkyl which is interrupted by one or several non-successive O atoms; phenyl substituted C₁-C₄ alkyl, C₂-C₈ alkenyl, phenyl, naphthyl, biphenyl, C₅-C₁₂-cycloalkyl or a 5- or 6-membered O-, S- or N-containing heterocyclic ring, the radicals phenyl, naphthyl, biphenyl, C₅-C₁₂ cycloalkyl or the 5- or 6-membered O-, S- or N-containing heterocyclic ring being unsubstituted or substituted by one to five halogen, C₁-C₁₈ alkyl, C₁-C₈ alkylthio and/or C₁-C₈ alkoxy;
by
(1) reacting organic phosphorus halides of formula (II) 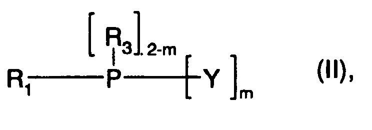 wherein R₁, R₃ and m have the meaning cited above;
and Y is Br or Cl,
with sodium in a solvent in the presence of an activator, wherein sodium is present in the form of a dispersion of sodium particles having a mean particle size of ≤ 200 µm in the solvent,
(2) subsequent reaction with acid halides of formula (III) 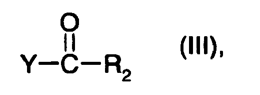
wherein R₂ and Y have the meaning cited above;
which process is carried out without isolation of the intermediates.

2. The process according to claim 1, wherein R₁, R₂ and R₃ are independently from each other phenyl, naphthyl and biphenyl, being unsubtituted or substituted by one to five halogen, C₁-C₈ alky and/or C₁-C₈ alkoxy.

3. The process according to claim 2, wherein R₁ and R₃ are phenyl and R₂ is 2,4,6-trimethylphenyl.

4. The process according to any one of claims 1 to 3, wherein the activator is chlorobenzene and/or n-butanol.

5. The process according to any one of claims 1 to 4, wherein the alkali metal is dispersed in the solvent by means of a high speed turbine stirrer.

6. A process according to any one of claims 1 to 5, wherein from 4 to 8 atom equivalents of the alkali metal are used for the preparation of compounds of formula (I), wherein m is 2, and 2 to 4 atom equivalents of the alkali metal are used for the preparation of compounds of formula (I), wherein m is 1.

7. A process according to any one of claims 1 to 6, wherein the reaction (1) of the organic phosphorus halides (II) with an alkali metal is carried out in the temperature range from -20° to +160°C.

8. A process according to any one of claims 1 to 7, wherein the reaction (2) of the metallised phosphine with the acid chloride (III) is carried out at -20° to +120°C.

9. A process according to any one of claims 1 to 8, wherein the reaction steps (1) and (2) are carried out in toluene or ethyl benzene as solvent.

## Patentansprüche

1. Verfahren zur Herstellung von Acylphosphinen der Formel (I) 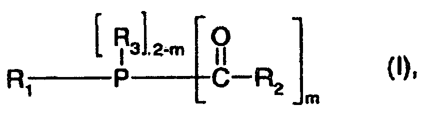 worin
m für 1 oder 2 steht;
R₁ für C₁-C₁₈-Alkyl, durch ein oder mehrere nicht aufeinanderfolgende O-Atome unterbrochenes C₂-C₁₈-Alkyl, durch Phenyl substituiertes C₁-C₄-Alkyl, C₂-C₈-Alkenyl, Phenyl, Naphthyl, Biphenyl, C₅-C₁₂-Cycloalkyl oder einen 5- oder 6-gliedrigen O-, S- oder N-haltigen hetero-cyclischen Ring steht, wobei die Reste Phenyl, Naphthyl, Biphenyl, C₅-C₁₂-Cycloalkyl oder der 5- oder 6-gliedrige O-; S- oder N-haltige heterocyclische Ring unsubstituiert oder einbis fünffach mit Halogen, C₁-C₈-Alkyl, C₁-C₈-Alkylthio und/oder C₁-C₈-Alkoxy substituiert sind;
R₂ für C₁-C₁₈-Alkyl, C₃-C₁₂-Cycloalkyl, C₂-C₁₈-Alkenyl, Phenyl, Naphthyl, Biphenyl oder einen 5- oder 6-gliedrigen O-, S- oder N-haltigen heterocyclischen Ring steht, wobei die Reste Phenyl, Naphthyl, Biphenyl oder der 5- oder 6-gliedrige O-, S- oder N-haltige heterocyclische Ring unsubstituiert oder ein- bis vierfach mit C₁-C₈-Alkyl, C₁-C₈-Alkoxy, C₁-C₈-Alkylthio und/oder Halogen substituiert sind;
R₃ für C₁-C₁₈-Alkyl, durch ein oder mehrere nicht aufeinanderfolgende O-Atome unterbrochenes C₂-C₁₈-Alkyl, durch Phenyl substituiertes C₁-C₄-Alkyl, C₂-C₈-Alkenyl, Phenyl, Naphthyl, Biphenyl, C₅-C₁₂-Cycloalkyl oder einen 5- oder 6-gliedrigen O-, S- oder N-haltigen hetero-cyclischen Ring steht, wobei die Reste Phenyl, Naphthyl, Biphenyl, C₅-C₁₂-Cycloalkyl oder der 5- oder 6-gliedrige O-, S- oder N-haltige heterocyclische Ring unsubstituiert oder einbis fünffach mit Halogen, C₁-C₁₈-Alkyl, C₁-C₈-Alkylthio und/oder C₁-C₈-Alkoxy substituiert sind;
durch
(1) Umsetzung von organischen Phosphorhalogeniden der Formel (II) 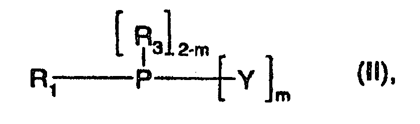 worin R₁, R₃ und m die oben angegebene Bedeutung haben
und Y für Br oder C1 steht,
mit Natrium in einem Lösungsmittel in Gegenwart eines Aktivators, wobei Natrium in Form einer Dispersion von Natriumteilchen mit einer mittleren Teilchengröße ≤ 200 µm in dem Lösungsmittel vorliegt,
(2) anschließende Umsetzung mit Säurehalogeniden der Formel (III) 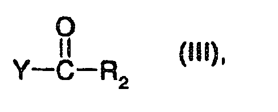
worin R₂ und Y die oben angegebene Bedeutung haben;
wobei das Verfahren ohne Isolierung der Zwischenprodukte durchgeführt wird.

2. Verfahren nach Anspruch 1, bei dem R₁, R₂ und R₃ unabhängig voneinander für unsubstituiertes oder ein- bis fünffach mit Halogen, C₁-C₈-Alkyl und/oder C₁-C₈-Alkoxy substituiertes Phenyl, Naphthyl oder Biphenyl steht.

3. Verfahren nach Anspruch 2, bei dem R₁ und R₃ für Phenyl stehen und R₂ für 2,4,6-Trimethylphenyl steht.

4. Verfahren nach einem der Ansprüche 1 bis 3, bei dem es sich bei dem Aktivator um Chlorbenzol und/oder n-Butanol handelt.

5. Verfahren nach einem der Ansprüche 1 bis 4, bei dem das Alkalimetall mit Hilfe eines Hochgeschwindigkeitsturbinenrührers in dem Lösungsmittel dispergiert wird.

6. Verfahren nach einem der Ansprüche 1 bis 5, bei dem zur Herstellung von Verbindungen der Formel (I), worin m für 2 steht, 4 bis 8 Atomäquivalente des Alkalimetalls und zur Herstellung von Verbindungen der Formel (I), worin m für 1 steht, 2 bis 4 Atomäquivalente des Alkalimetalls verwendet werden.

7. Verfahren nach einem der Ansprüche 1 bis 6, bei dem die Umsetzung (1) der organischen Phosphorhalogenide (II) mit einem Alkalimetall bei -20° bis +160°C durchgeführt wird.

8. Verfahren nach einem der Ansprüche 1 bis 7, bei dem die Umsetzung (2) des metallisierten Phosphins mit dem Säurechlorid (III) bei -20° bis +120°C durchgeführt wird.

9. Verfahren nach einem der Ansprüche 1 bis 8, bei dem die Reaktionsschritte (1) und (2) in Toluol oder Ethylbenzol als Lösungsmittel durchgeführt werden.

## Revendications

1. Procédé pour la préparation d'acylphosphines de formule (I) : 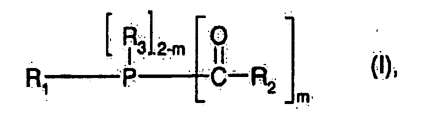 dans laquelle :
m est égal à 1 ou à 2 ;
R₁ représente un alkyle en C₁-C₁₈, un alkyle en C₂-C₁₈ qui est interrompu par un ou plusieurs atomes d'oxygène non successifs, un alkyle en C₁-C₄ substitué par un phényle, un alcényle en C₂-C₈, un phényle, un naphtyle, un biphényle, un cycloalkyle en C₅-C₁₂ ou un noyau hétérocyclique à 5 ou 6 éléments contenant de l'oxygène, du soufre ou de l'azote, les radicaux phényle, naphtyle, biphényle, cycloalkyle en C₅-C₁₂ ou le noyau hétérocyclique à 5 ou 6 éléments contenant de l'oxygène, du soufre ou de l'azote, se présentant sous une forme non substituée ou substituée par un à cinq halogènes, groupements alkyle en C₁-C₈, alkylthio en C₁-C₈ et/ou alcoxy en C₁-C₈;
R₂ représente un groupement alkyle en C₁-C₁₈, cycloalkyle en C₃-C₁₂, alcényle en C₂-C₁₈, phényle, naphtyle, biphényle ou un noyau hétérocyclique à 5 ou 6 éléments contenant de l'oxygène, du soufre ou de l'azote, les radicaux phényle, naphtyle, biphényle ou le noyau hétérocyclique à 5 ou 6 éléments contenant de l'oxygène, du soufre ou de l'azote, se présentant sous une forme non substituée ou substituée par un à quatre groupements alkyle en C₁-C₈, alcoxy en C₁-C₈, alkylthio en C₁-C₈ et/ou halogènes;
R₃ représente un alkyle en C₁-C₁₈, un alkyle en C₂-C₁₈ qui est interrompu par un ou plusieurs atomes d'oxygène non successifs, un alkyle en C₁-C₄ substitué par un phényle, un alcényle en C₂-C₈, un groupement phényle, naphtyle, biphényle, cycloalkyle en C₅-C₁₂ ou un noyau hétérocyclique à 5 ou 6 éléments contenant de l'oxygène, du soufre ou de l'azote, les radicaux phényle, naphtyle, biphényle, cycloalkyle en C₅-C₁₂ ou le noyau hétérocyclique à 5 ou 6 éléments contenant de l'oxygène, du soufre ou de l'azote, se présentant sous une forme non substituée ou substituée par un à cinq halogènes, groupements alkyle en C₁-C₁₈, alkylthio en C₁-C₈ et/ou alcoxy en C₁-C₈ ;
en procédant de la manière suivante:
(1) on fait réagir des halogénures de phosphore organique de formule (II) : 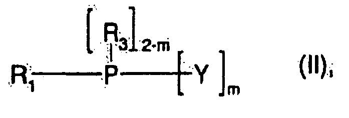 dans laquelle R₁, R₃ et m ont la signification précitée ;
et Y représente l'élément Br ou C1,
avec du sodium dans un solvant en présence d'un activateur, le sodium se présentant sous la forme d'une dispersion de particules de sodium ayant une taille particulaire moyenne ≤ 200 µm dans le solvant,
(2) on fait ensuite réagir le tout avec des halogénures d'acide de formule (III) : 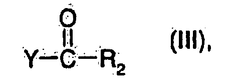
dans laquelle R₂ et Y ont la, signification précitée ;
le procédé en question étant réalisé sans isolement des composés intermédiaires.

2. Procédé selon la revendication 1, dans lequel R₁, R₂ et R₃ représentent, indépendamment les uns des autres, un groupement phényle, naphtyle et biphényle, se présentant sous une forme non substituée ou substituée par un à cinq halogènes, groupements alkyle en C₁-C₈ et/ou alcoxy en C₁-C₈.

3. Procédé selon la revendication 2, dans lequel R₁ et R₃ représentent un phényle et R₂ représente le 2,4,6-triméthylphényle.

4. Procédé selon l'une quelconque des revendications 1 à 3, dans lequel l'activateur est le chlorobenzène et/ou le n-butanol.

5. Procédé selon l'une quelconque des revendications 1 à 4, dans lequel le métal alcalin est dispersé dans le solvant au moyen d'un agitateur à turbine à grande vitesse.

6. Procédé selon l'une quelconque des revendications 1 à 5, dans lequel on utilise 4 à 8 équivalent-atomes du métal alcalin pour la préparation des composés de formule (I), dans laquelle m est égal à 2, et 2 à 4 équivalent-atomes dû métal alcalin sont utilisés pour la préparation des composés de formule (I), dans laquelle m est égal à 1.

7. Procédé selon l'une quelconque des revendications 1 à 6, dans lequel on effectue la réaction (1) des halogénures de phosphore organique (II) avec un métal alcalin dans la plage de températures de -20° à +160 °C.

8. Procédé selon l'une quelconque des revendications 1 à 7, dans lequel on effectue la réaction (2) de la phosphine sous forme métallée avec le chlorure d'acide (III) à une température de -20° à +120 °C.

9. Procédé selon l'une quelconque des revendications 1 à 8, dans lequel les étapes réactionnelles (1) et (2) sont effectuées dans le toluène ou dans l'éthylbenzène comme solvant.
